# EUROPEAN PATENT APPLICATION

(11) **EP 4 439 428 A1**
(43) Date of publication of application: **02.10.2024**
(21) Application number: 23166076.2
(22) Date of filing: 31.03.2023
(51) Int. Cl.: G06Q 10/083

(54) **DISTRIBUTION SYSTEM FOR CONTAINERIZED AND NON-CONTAINERIZED FREIGHT THROUGH INTERMODAL NETWORKS**

(71) Applicant: Moynihan, Conor, Boston, MA 02127 (US)
(72) Inventor: Moynihan, Conor, Boston, MA 02127 (US)
(74) Representative: Beck Greener LLP

(57) **Abstract**

A freight distribution center intralogistics system configured to increase the productivity of freight unit movements at and through the distribution center. The system generates a layout for stacking of a plurality of freight units, wherein each freight unit is assigned a queue position defining their position in a container stack. The queue position is a function of pickup or drop-off times of the associated freight, wherein those times are determined through the algorithmic evaluation of at least driver-input and facility-input queue parameters. The layout may also provide indicators of the individual queue parameters that are input and computed by the system.

## Description

The present invention relates to freight distribution center intralogistics and, more particularly, a distribution system for containerized and non-containerized freight through intermodal networks configured to decrease un-productive freight movements within a freight facility, thereby increasing the freight fluidity and/or throughput for import and export at the freight facility.

Freight distribution centers, including but not limited to container terminals, rail yard facilities, airplane freight cargo facilities, stripping terminals, and the like, tender freight in a variety of different ways. Some have websites whereby drivers or customers can make a pickup appointment. Often these pickup appointments are used as placeholders and create issues for facilities when drivers cancel. Some facilities distribute freight on a first come first serve basis, which makes logistics difficult as the pickup time for a specific freight unit is indeterminate. As a result, current freight facilities spend an inordinate amount of time, money and energy moving freight un-productively within their given facilities due to the random nature of either the bookings pickup appointment system or the first come first served systems, since cancellations are not infrequent. As a result, the current systems are inefficient as freight is constantly being moved around to retrieve the "correct piece of freight." In summation, the problem is inefficient distribution and unproductive movement of freight within the respective freight facilities, resulting from poor and non-existent intralogistics technologies/systems.

As can be seen, there is a need for a freight distribution center intralogistics system configured to decrease un-productive freight movements and increase freight fluidity and/or throughput for import and export at freight facilities. The system embodied in the present invention also serves to keep the facilities and carriers compliant with the new Ocean Shipping Reform Act of 2022, which mandates that carriers and facilities certify that any detention or demurrage charges are valid, follow best practices for the industry, and notify importers when freight has become available.

The system of the present invention is configured to minimize un-productive freight-unit movement within facilities that are the result of a variety of factors, hereinafter "queue parameters". The software application embodied in the present invention takes these factors (derived from input by the facilities and the truck driving community) into account and creates the most efficient "freight queue." This freight queue solves the problem of un-productive freight movement which wastes time, money, and energy. The present invention is applicable to the return of empty freight containers and the exportation of freight.

The process embodied in the present invention is a reversal of the current model whereby the queue will dictate to the driving community, importers, and exporters when freight needs to be picked up or delivered. The queue positions are informed by pickup or drop-off times for freight at respective facilities, wherein the timing is determined by evaluating data or queue parameters provided separately form the driving community and the facility. The freight queue may be represented in a layout based on computed queue variables by leveraging the data (e.g., input queue paraments) from the driving community, importers, exporters, and all other parties involved in the movement of the unit of freight.

According to an aspect of the present invention, there is provided a method of stacking freight containers in a facility, the method comprising: storing, in a computer system including memory and one or more processors, driver queue parameters and facility queue parameters associated with each of a plurality of freight containers at the facility, wherein an associated driver community and the facility provides the driver and facility queue parameters, respectively; computing, by the one or more processors, one or more time parameters from said queue parameters; and determining, by the one or more processors, a queue position for each freight unit based on said time parameters.

In one embodiment, the method further comprises rendering, by the one or more processors, a layout of a container stack of the plurality of freight containers based on the queue position for each freight unit.

In one embodiment, the method further comprises receiving, via the one or more processors, one or more owner queue parameters for one or more freight units, wherein the one or more owner queue parameters is inputted by a freight owner.

In one embodiment, the one or more owner queue parameters comprise freight priority indicator (FPI).

In one embodiment, the FPI is represented on said layout.

In one embodiment, the method of stacking freight containers in a facility further includes rendering, by the one or more processors, a layout of a container stack of the plurality of freight containers based on the queue position for each freight unit; receiving, via the one or more processors, one or more owner queue parameters for one or more freight units, wherein the one or more owner queue parameters is inputted by a freight owner, wherein the one or more owner queue parameters comprise freight priority indicator (FPI), wherein the FPI is represented on said layout.

According to another aspect of the present invention, there is provided a method of queuing a plurality of freight units in a facility, wherein each freight unit is to be dropped off or picked up by a carrier of a carrier community, the method comprising: storing, in a computer system including memory and one or more processors, carrier queue parameters and facility queue parameters associated with each of the plurality of freight units, wherein each carrier inputs the carrier queue parameters via a computing device remote to the computing system, and wherein the facility inputs the facility queue parameters; computing, by the one or more processors, one or more time parameters associated with each freight unit based on said queue parameters; and determining, by the one or more processors, a queue position for each freight unit, relative to the remaining plurality of freight units, based on the associated time parameters.

In one embodiment, the method further comprises: rendering, by the one or more processors, a two-dimensional (2D) or three-dimensional (3D) layout display of the plurality of freight units based on the queue position for each freight unit.

In one embodiment, the method further comprises determining, by the one or more processors, a designated pick-up or drop-off time for each freight for each freight unit, relative to the remaining plurality of freight units, based on associated time parameters.

In one embodiment, each queue position is defined, by the one or more processors, by 3D coordinates comprising top, middle, and bottom coordinates.

In one embodiment, the 3D coordinates are defined by the designated pick-up or drop-off time.

In one embodiment, the facility queue parameters comprise an equipment availability status (EAS).

In one embodiment, the carrier queue parameters comprise a driver availability status (DAS).

In one embodiment, the carrier queue parameters comprise a driver designation.

In one embodiment, the facility queue parameters comprise a freight priority indicator (FPI).

In one embodiment, the FPI is represented as an FPI indication on said layout display.

In one embodiment, the method further comprises the FPI comprises a dangerous freight indication for at least one dangerous freight unit of the plurality of freight units; further comprising computing, by the one or more processors, the one or more time parameters associated with the at least one dangerous freight unit by comparing the dangerous freight indication against the driver designation.

In one embodiment, the facility queue parameters comprises a facility equipment data set; further comprising computing, by the one or more processors, the one or more time parameters associated with the plurality of freight unit by comparing the facility equipment data set against a lookup table.

In yet another aspect of the present invention, method of queuing a plurality of freight units in a facility, wherein each freight unit is to be dropped off or picked up by a carrier of a carrier community, the method includes the following: storing, in a computer system including memory and one or more processors, carrier queue parameters and facility queue parameters associated with each of the plurality of freight units, wherein each carrier inputs the carrier queue parameters via a computing device remote to the computing system, and wherein the facility inputs the facility queue parameters; computing, by the one or more processors, one or more time parameters associated with each freight unit based on said queue parameters; determining, by the one or more processors, a queue position for each freight unit, relative to the remaining plurality of freight units, based on the associated time parameters; rendering, by the one or more processors, a two-dimensional (2D) or three-dimensional (3D) layout display of the plurality of freight units based on the queue position for each freight unit; determining, by the one or more processors, a designated pick-up or drop-off time for each freight for each freight unit, relative to the remaining plurality of freight units, based on associated time parameters, wherein each queue position is defined, by the one or more processors, by 3D coordinates comprising top, middle, and bottom coordinates, wherein the 3D coordinates are defined by the designated pick-up or drop-off time, wherein the facility queue parameters comprise an equipment availability status (EAS), wherein the carrier queue parameters comprise a driver availability status (DAS), wherein the carrier queue parameters comprise a driver designation, wherein the facility queue parameters comprise a freight priority indicator (FPI), wherein the FPI is represented as an FPI indication on said layout display, wherein the FPI includes a dangerous freight indication for at least one dangerous freight unit of the plurality of freight units; further including computing, by the one or more processors, the one or more time parameters associated with the at least one dangerous freight unit by comparing the dangerous freight indication against the driver designation, wherein the facility queue parameters provides a facility equipment data set; and further including computing, by the one or more processors, the one or more time parameters associated with the plurality of freight unit by comparing the facility equipment data set against a lookup table.

It being understood that 'carrier' and 'driver' may include non-driving individual and entities of the driver community, e.g., the dispatcher or manager of a trucking company.

These and other features, aspects and advantages of the present invention will become better understood with reference to the following drawings, description and claims.

Embodiments of the present invention will now be described by example only and with reference to the figures in which:
FIG. 1 is a flow chart of an exemplary embodiment of the present invention.
FIG. 2 is a schematic view of an exemplary embodiment of the present invention, illustrating a 3D freight queue representation of containerized freight.
FIG. 3 is a schematic view of an exemplary embodiment of the present invention, illustrating the 3D freight queue representation of containerized freight, showing an indication provided by the representation of when one or more freight units are not cleared by customer.
FIG. 4 is a schematic view of an exemplary embodiment of the present invention, illustrating the 3D freight queue representation of containerized freight, showing an indication provided by the representation of priority containers.
FIG. 5 is a schematic view of an exemplary embodiment of the present invention, illustrating a 2D freight queue representation of non-containerized freight.
FIG. 6 is a schematic view of an exemplary embodiment of the present invention, illustrating inputs to a systemic algorithm.
FIG. 7 is a schematic view of an exemplary embodiment of the present invention.
FIG. 8 is a schematic perspective view of an exemplary embodiment of the present invention, illustrating a container stack prior to sorting.
FIG. 9 is a schematic perspective view of an exemplary embodiment of the present invention, illustrating a sorted container.

The following detailed description is of the best currently contemplated modes of carrying out exemplary embodiments of the invention. The description is not to be taken in a limiting sense but is made merely for the purpose of illustrating the general principles of the invention, since the scope of the invention is best defined by the appended claims.

Broadly, an embodiment of the present invention provides a freight distribution center intralogistics system configured to decrease un-productive freight movements and increase freight fluidity and/or throughput for import and export at freight facilities.

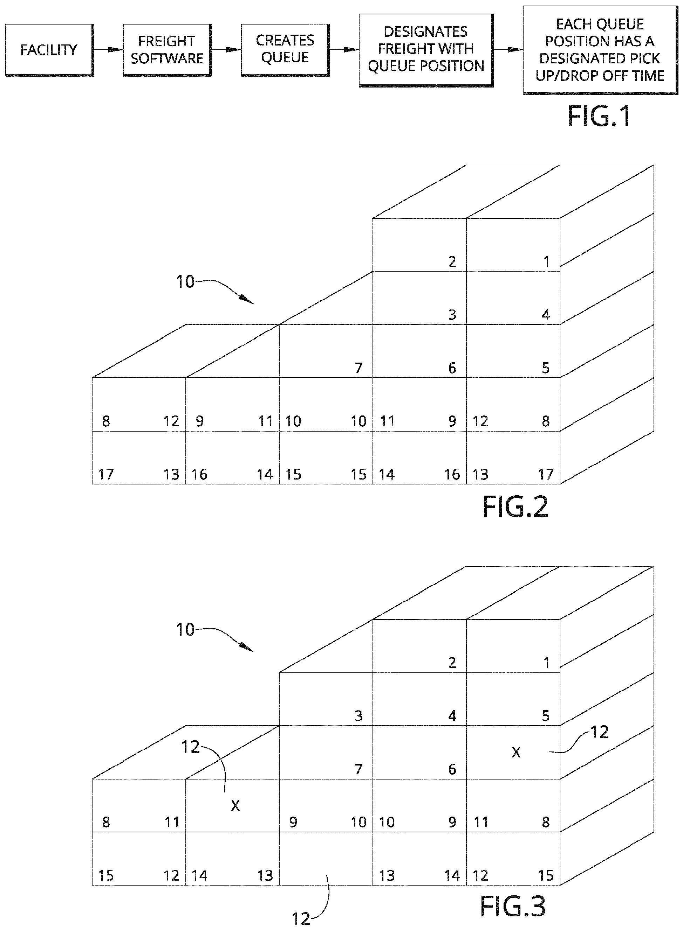

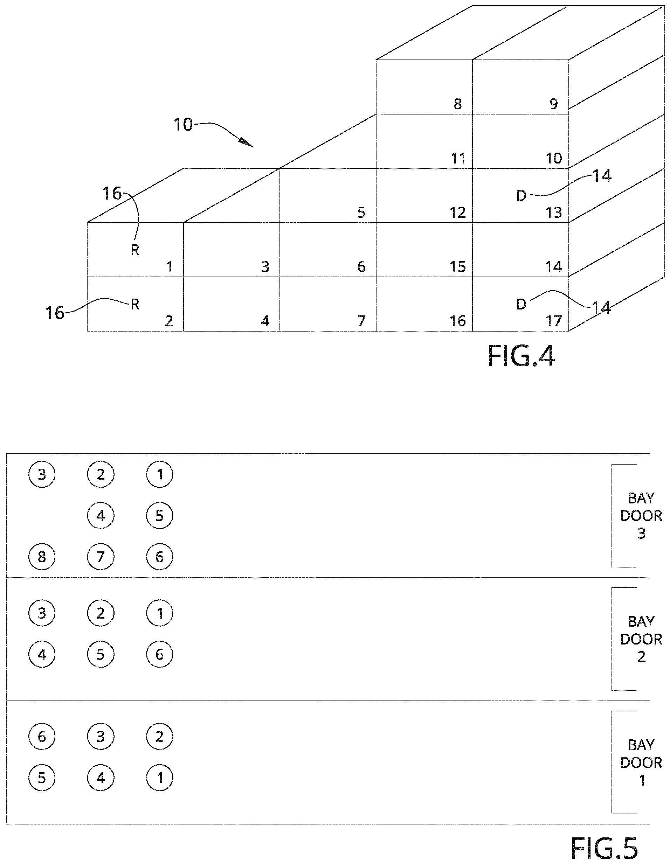

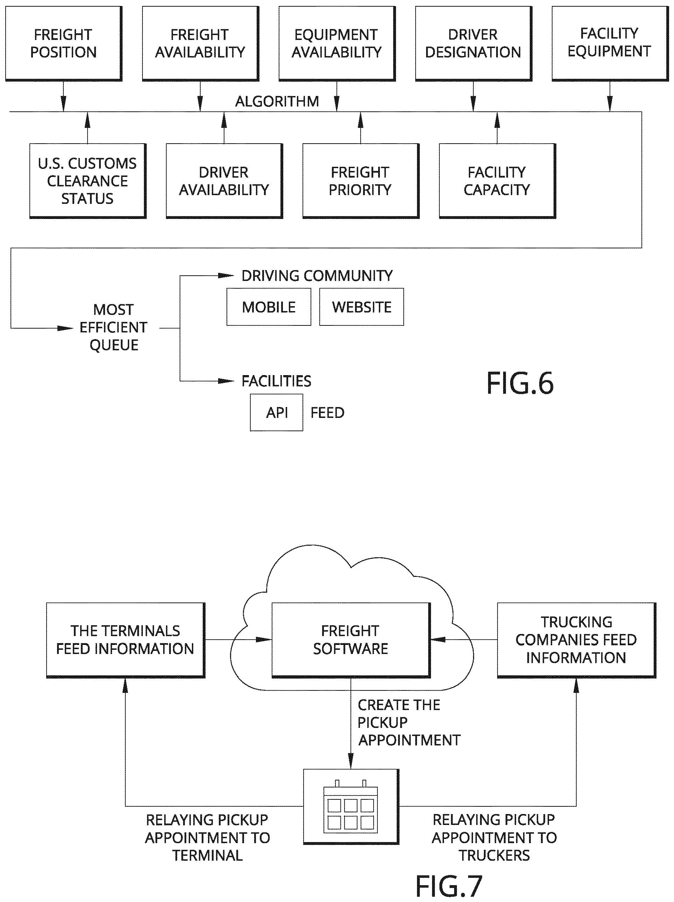

Referring now to Figures 1 through 9, the present invention may include a freight distribution center intralogistics system that determines a freight queue for a plurality of freight units to be picked up/dropped off, wherein each freight unit has a queue position which is function of its pickup/delivery time, which in turn is defined by queue parameters. The queue position is relayed to both the distribution center and the driver that will be picking up/dropping off the freight unit. The queue parameters may include driver data (inputted by members of the driving community), facility data (inputted by the distribution center/facility), and owner data inputted by the owners of the freight as well as other values that are input by other stakeholders, and computational values resulting from the systemic algorithm.

Facility-data queue parameters are associated with the freight unit based on its intrinsic identity or are associated with the properties of the facility.

Facility data intrinsic to the freight unit includes its current location within one or more container stacks, as well as data based on the nature of the freight such as regulatory information, availability status information, and freight priority information. The current and future physical location of each freight unit may be identified by stack coordinates associated with three-dimensional (3D) and/or two-dimensional (2D) displays rendered and displayed by the system. The 3D and/or 2D displays may provide indications of a freight position of each freight unit in 2D and/or 3D space, wherein each freight position may be defined by stack coordinates. Stack coordinates are associated location points along a stack, such as but not limited to a top, a middle, and bottom stack coordinates; a left, a middle, and right stack coordinates; or a front, a middle, and rear stack coordinates, or the like. These stack coordinates may be expressed mathematically so that each freight position may be located on a 2D X, Y coordinate plane or a 3D X, Y, Z coordinate plane and integrated into an internal 3D and/or 2D model used in conjunction with subsequent data acquisition. The 3D and 2D models may be part of a mapping system capable of production and representation of a map/layout of the distribution center and associated container stacks. It is understood that a container stack may consist of one or more freight units.

Facility data associated with the properties of the facility include Freight Capacity, Facility Equipment, Equipment Availability Status (EAS), and the like.

Facility Capacity impacts the timing of drop offs, and thus queue position. Queue position will take into consideration current capacity and current freight queue positions for each freight unit to be picked up. By way of illustration, if a container terminal facility has twenty stacks, but only six overhead cranes to work the stacks, then only six stacks can be worked at once. The present invention incorporates look-up tables of pre-determined time parameters associated with each piece of facility equipment indicating the length of time for different work cycles (stacking and unstacking) of freight units, a Conversely, once freight has left the facility, that space becomes open and can now receive another container or piece of freight into that slot/position.

Facility Equipment impacts freight retrieval and the timing of retrieving freight unit and thus queue position. Depending on each distribution center and how freight is positioned, each distribution center will use different equipment to retrieve/move freight. Because these pieces of equipment move differently, the algorithm will consider the piece of facility equipment (including but not limited to top loading crane/gantry, sideloading vehicles (e.g., a truck with a giant magnetic arm that grabs containers), forklifts, etc.) and how it moves and works. Therefore, in addition to the timing parameters, the present invention provides positional parameters. For example, since top loading cranes move horizontally above a container stack resulting in work done side to side, top to bottom they would be associated with a different positional parameter than a side-reaching crane which works differently.

EAS indicates that certain freight (e.g., shipping containers) needs special equipment called chassis to pick-up/drop-off freight. The software will consider the availability of this type of equipment and provides an EAS indicator for each relevant freight unit.

Driver-data queue parameters may be input from driver-users, and may include a Driver Designation, Driver Availability Status (DAS), and the like.

Driver Designation may fall in two categories: drivers are either Dangerous Goods certified, or Non-Dangerous Goods certified.

DAS indicates whether the associated designated driver has optionally declined shipments and/or deferred a pickup/drop off time to a later time or date. A DAS indicator for each relevant freight unit is retrievably stored in the 2D and 3D model and so is representable along the rendered distribution center/container stack layout.

Owner-data queue parameters may include regulatory information provided by the owner of the freight, such as but not limited to U.S. Customs Clearance Status (when applicable for imports this may include data related to various agencies such as FDA, EPA, Coast Guard, etc.). Inputted data may be retrievably stored in data logs, database, or the like,

The computational values may be in part output generated by the system, wherein the output results from the driver-inputted, facility-inputted, and owner-inputted data.

The computational values may be retrievably stored in a transactional database or distributed ledger with growing lists of records ("blocks") securely linked together via cryptographic hashes. Each block contains a cryptographic hash of the previous block, a timestamp (e.g., in a digital currency capacity) and transaction data, wherein the timestamp proves that the transaction data existed when the block was created.

A transactional database or distributed ledger may retrievably store the computational values regarding availability status for each freight unit, each associated Driver Designation, each associated Facility Equipment. Availability status may reference the status of a freight unit, where the status may be binary, toggling between available and unavailable. A freight unit may be unavailable due to damage or outstanding monies owed. The available status may have different types designated by the respective Carriers and Facilities. Carriers are defined as but not limited to Steam Ship Lines, Rail Lines, Air Lines, Trucking Companies, Non-Vessel Operating Commercial Carriers and 3PL's or Third-Party Logistics.

The transactional database or distributed ledger may retrievably store Freight Priority Indicator (FPI) for each freight unit. Some freight is prioritized over other types of freight. Perishable or Refrigerated freight is always prioritized over non-perishable. Dangerous Goods are prioritized over non-Dangerous goods based on respective driver scarcity/numbers. For instance, a Non-Dangerous Goods designated drivers cannot pickup/drop off Dangerous Goods. Whereas Dangerous Goods designated drivers can pick up/drop off both Dangerous Goods and Non-Dangerous goods. Due to driver scarcity Dangerous Goods Drivers will always be prioritized to pick up Dangerous Goods. FPI may be received by the system as facility, driver or owner input queue parameters. The software application embodied in the present invention will assign priority (e.g., FPI) based on the following combination of the following:
a. Refrigerated and Dangerous freight
b. Refrigerated and Non-Dangerous freight
c. Non-Refrigerated and Dangerous freight
d. Non-Frigerated and Non-Dangerous Goods

The transactional database or distributed ledger may retrievably store computed queue positions as a function of time parameters based on the collected, driver-inputted and facility-inputted, queue parameters. The system is configured to determine time parameters from a look-up table for each queue parameter or compute a time parameter through the product of two or more queue parameters, such as taking the product of EAS and Facility Equipment. Other queue parameters may be assigned constant or variable timing parameters, e.g., a DAS of unavailable will have a time parameter of zero. In another example, the Driver Designation of Dangerous Goods certified may yield a time parameter when taken as a product of a FPI related to one or Dangerous Goods freight units in a container stack.

In some embodiments, a system and method can be implemented as a computer-networked service in communication with various types of users. The users can include distribution center managers, trucking companies, freight owners, truck drivers, and end users. In some embodiments, the system can reside on a central server or servers and can include one or more processors and memory resources. The users can access the system via any suitable communication network, such as the internet, a wired or wireless network, and the like.

In some embodiments, a computer-implemented system can provide each type of user with an application residing or operating on a user's computing device that provides an interface suitable for the needs and requirements of that user. Applications can include or use any suitable application programming interfaces (APIs) to enable communication of data between the system and the various user devices. In some embodiments, the API can conform to the constraints of representational state transfer (RESTful) architecture. Other API call formats or protocols can be used, such as, without limitation, HTML or XML tags, JavaScript, PHP, Python, Perl, or AJAX. C, C++, MATLAB, R, PHP, C#, R, and the like, which comport with the back-end software coding language. The front-end software can be built utilizing the programming language React and the like can be available within the Android and IOS operating systems. Secure communication access methods can be employed to restrict access to only authorized users. Communications methods can employ electronic data interchange (EDI) methods and standards, such as American National Standards Institute (ANSI) ASC X12. Data entry can be done electronically, for example, via suitable user interfaces, and/or can be done manually.

The system can include various modules or components to carry out computer-executable instructions or code, stored in memory, to implement the various processes and functionalities described herein. The various modules or components can be implemented independently of each other, or can overlap or share various tasks, routines, sub-routines, engines, processing resources, memory resources, and the like.

In some embodiments, the system can include a set up module, by which users can set up an account and profile and which can allow users to update the system with appropriate data at various times. In some embodiments, the system can communicate with one or more of the following types of users.

As mentioned above, the various users can input one or more queue parameters. For instance, the distribution center managers can update the system with Equipment Availability Status (EAS) and the weighted factors that go into determining the Freight Priority Indicator (FPI) for each freight unit. The distribution center manager (e.g., facility-user) can input the facility data of Facility Capacity and Facility Equipment information as well as information regarding incoming a total amount of freight units as well as the address of or directions to an appropriate gate, parking instructions, and the like.

The truck driver and/or trucking companies can input, through their computer system interface, the driver-data of Driver Designation and Driver Availability Status (DAS). In certain embodiments, the software application may be configured to scrape various facilities websites, match up input from the driving community.

The freight owners can input regulatory information and the nature of the freight which is used to determine the availability status information, and freight priority information.

The invention can receive facility data input via an API from the associated facilities, and the present invention can receive driver data input from the truck driving community (e.g., driver availability status, equipment availability status, Driver Designation) by way of each driver's mobile computing device. Drivers will create a profile and will provide their designation and their availability over the user interface of their mobile computing device. Equipment availability will come from either the facilities or the driver community based on each individual piece of freight. Once the software has all the inputs it creates a queue based off those inputs from data received from the facility, the drivers, and the freight owners. The algorithm will compute and assign each freight unit with a queue position that includes stack coordinate. Each queue position has a specific pickup/drop off time associated with it. This pickup/drop off time is then relayed to both the facilities, the driving community, and the ultimate end-user of the freight.

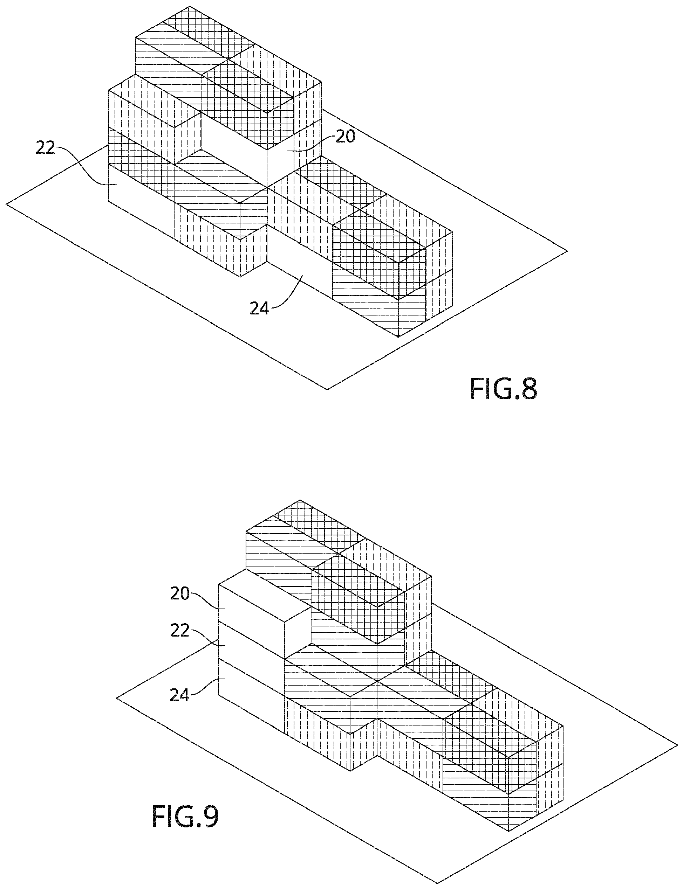

The freight units 10 can be segregated in the stacks in predetermined locations within the distribution center. In use, the system can transmit a request to a terminal to prepare container stacks based on their assigned queue position which may be represented on a 3D or 2D layout from which the facility can build from; thereby, the system enables freight units 10 to be placed according to their queue position. The queue position is a function of time of pickup/drop off time, which in turn is computed from the queue parameters. The queue position may be represented through a 2D or 3D model layout, which can identify the most efficient freight queue - i.e., the stacked arrangement of various freight units 10, which are associated with their queue position identifier (number in FIGS. 2 and 3). Additionally, indicators can be represented on the model layout to assist the distribution center in stacking a plurality of freight units 10. For instance, non-cleared containers 12 may be indicated with an 'X', the dangerous containers 14 with a 'D', and the refrigerated containers 16 with an 'R'. Accordingly, an unsorted stack (see FIG. 8) can be (re-)arranged so that the first, second and third priority containers 20, 22, and 24 are vertically stacked and disposed along an edge and/or corner of the stack.

In certain embodiments, the network may refer to any interconnecting system capable of transmitting audio, video, signals, data, messages, or any combination of the preceding. The network may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

The server and the computer of the present invention may each include computing systems. This disclosure contemplates any suitable number of computing systems. This disclosure contemplates the computing system taking any suitable physical form. As example and not by way of limitation, the computing system may be a virtual machine (VM), an embedded computing system, a system-on-chip (SOC), a single-board computing system (SBC) (e.g., a computer-on-module (COM) or system-on-module (SOM)), a desktop computing system, a laptop or notebook computing system, a smart phone, an interactive kiosk, a mainframe, a mesh of computing systems, a server, an application server, or a combination of two or more of these. Where appropriate, the computing systems may include one or more computing systems; be unitary or distributed; span multiple locations; span multiple machines; or reside in a cloud, which may include one or more cloud components in one or more networks. Where appropriate, one or more computing systems may perform without substantial spatial or temporal limitation one or more steps of one or more methods described or illustrated herein. As an example, and not by way of limitation, one or more computing systems may perform in real time or in batch mode one or more steps of one or more methods described or illustrated herein. One or more computing systems may perform at different times or at different locations one or more steps of one or more methods described or illustrated herein, where appropriate.

In some embodiments, the computing systems may execute any suitable operating system such as IBM's zSeries/Operating System (z/OS), MS-DOS, PC-DOS, Mac-OS, Windows, Unix, OpenVMS, an operating system based on Linux, or any other appropriate operating system, including future operating systems. In some embodiments, the computing systems may be a web server running web server applications such as Apache, Microsoft's Internet Information Server^{™}, and the like.

In particular embodiments, the computing systems include a processor, a memory, a user interface and a communication interface. In particular embodiments, the processor includes hardware for executing instructions, such as those making up a computer program. The memory includes main memory for storing instructions such as computer program(s) for the processor to execute, or data for processor to operate on. The memory may include mass storage for data and instructions such as the computer program. As an example and not by way of limitation, the memory may include an HDD, a floppy disk drive, flash memory, an optical disc, a magneto-optical disc, magnetic tape, a Universal Serial Bus (USB) drive, a solid-state drive (SSD), or a combination of two or more of these. The memory may include removable or non-removable (or fixed) media, where appropriate. The memory may be internal or external to computing system, where appropriate. In particular embodiments, the memory is non-volatile, solid-state memory.

The user interface may include hardware, software, or both providing one or more interfaces for communication between a person and the computer systems. As an example, and not by way of limitation, a user interface device may include a keyboard, keypad, microphone, monitor, mouse, printer, scanner, speaker, still camera, stylus, tablet, touchscreen, trackball, video camera, another suitable user interface or a combination of two or more of these. A user interface may include one or more sensors. This disclosure contemplates any suitable user interface.

The communication interface includes hardware, software, or both providing one or more interfaces for communication (e.g., packet-based communication) between the computing systems over the network. As an example, and not by way of limitation, the communication interface may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface. As an example, and not by way of limitation, the computing systems may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, the computing systems may communicate with a wireless PAN (WPAN) (e.g., a BLUETOOTH WPAN), a WI-FI network, a WI-MAX network, a cellular telephone network (e.g., a Global System for Mobile Communications (GSM) network), or other suitable wireless network or a combination of two or more of these. The computing systems may include any suitable communication interface for any of these networks, where appropriate.

It should be understood, of course, that the foregoing relates to exemplary embodiments of the invention and that modifications may be made without departing from the invention as set forth in the following claims.

## Claims

1. A method of queuing a plurality of freight units in a facility, wherein each freight unit is to be dropped off or picked up by a carrier of a carrier community, the method comprising:
storing, in a computer system including memory and one or more processors, carrier queue parameters and facility queue parameters associated with each of the plurality of freight units, wherein each carrier inputs the carrier queue parameters via a computing device remote to the computing system, and wherein the facility inputs the facility queue parameters;
computing, by the one or more processors, one or more time parameters associated with each freight unit based on said queue parameters; and
determining, by the one or more processors, a queue position for each freight unit, relative to the remaining plurality of freight units, based on the associated time parameters.

2. The method of claim 1, further comprising:
rendering, by the one or more processors, a two-dimensional (2D) or three-dimensional (3D) layout display of the plurality of freight units based on the queue position for each freight unit.

3. The method of claim 2, further comprising:
determining, by the one or more processors, a designated pick-up or drop-off time for each freight for each freight unit, relative to the remaining plurality of freight units, based on associated time parameters.

4. The method of claim 3, wherein each queue position is defined, by the one or more processors, by 3D coordinates comprising top, middle, and bottom coordinates.

5. The method of claim 4, wherein the 3D coordinates are defined by the designated pick-up or drop-off time.

6. The method of claim 5, wherein the facility queue parameters comprise an equipment availability status (EAS).

7. The method of claim 6, wherein the carrier queue parameters comprise a driver availability status (DAS).

8. The method of claim 7, wherein the carrier queue parameters comprise a driver designation.

9. The method of claim 8, wherein the facility queue parameters comprise a freight priority indicator (FPI).

10. The method of claim 9, wherein the FPI is represented as an FPI indication on said layout display.

11. The method of claim 10, wherein the FPI comprises a dangerous freight indication for at least one dangerous freight unit of the plurality of freight units; further comprising computing, by the one or more processors, the one or more time parameters associated with the at least one dangerous freight unit by comparing the dangerous freight indication against the driver designation.

12. The method of claim 11, wherein the facility queue parameters comprises a facility equipment data set; further comprising computing, by the one or more processors, the one or more time parameters associated with the plurality of freight unit by comparing the facility equipment data set against a lookup table.
